# EUROPÄISCHE PATENTSCHRIFT

(11) **EP 1 577 273 B1**
(45) Veröffentlichungstag und Bekanntmachung des Hinweises auf die Patenterteilung: **11.01.2012**
(21) Anmeldenummer: 05013575.5
(22) Anmeldetag: 01.10.2002
(51) Int. Cl.: C03B 33/03, C03B 33/07, C03B 33/027, B65G 49/06

(54) **Vorrichtung und Verfahren zum Konturenschneiden in Verbundglas**
Apparatus and method for cutting laminated glass along a desired contour
Dispositif et procédé pour couper du verre feuilleté selon un contour quelconque

(30) Priorität: 26.11.2001 DE 10157833
(43) Veröffentlichungstag der Anmeldung: 21.09.2005
(62) Teilanmeldung aus: 02021894.7
(73) Patentinhaber: HEGLA GmbH & Co. KG, 37688 Beverungen (DE)
(72) Erfinder: Manfred Vollbracht, 37688 Beverungen (DE); Christian Rotermund, 37671 Höxter (DE)
(74) Vertreter: Patentanwälte Dr. Solf & Zapf

(56) Entgegenhaltungen:
- EP-A- 0 299 927
- EP-A- 0 835 847
- EP-A- 1 118 592
- DE-A1- 1 471 967
- DE-A1- 4 234 536
- DE-C1- 19 822 282
- US-A- 2 328 405

## Beschreibung

Die Erfindung betrifft eine Vorrichtung zum Konturenschneiden in Verbundglas nach dem Oberbegriff des Anspruchs 1 und ein Verfahren zum Konturenschneiden in Verbundglas.

Unter Verbundglas versteht man eine aus zwei Glasplatten ausgebildete Scheibe, wobei eine erste innere Platte aus einem üblicherweise unbeschichteten Glas besteht und eine zweite äuβere Platte aus einem insbesondere beschichteten, insbesondere mit einer Wärmeschutzschicht versehenen Glas besteht. Die beiden Glasplatten sind mit einer Folie miteinander verklebt.

Um zwei derart miteinander verbundene Rohglasplatten in gebrauchsfähige Formate zu zerschneiden, werden Verbundglasschneidanlagen verwendet.

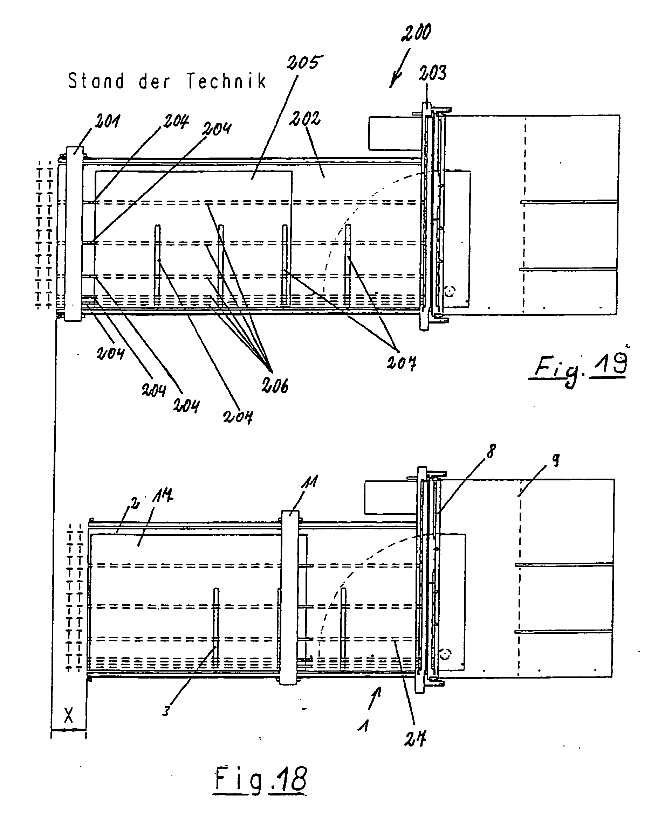

Eine bekannte Verbundglasschneidanlage 200 (Fig. 19) besitzt eine Verfahrbrücke 201, einen Auflagetisch 202 sowie eine Schneidbrücke 203. An der Verfahrbrücke 201 sind zur Schneidbrücke 203 hin Greifer 204 angeordnet, deren Greifermaul eine Verbundglasscheibe 205 klemmen kann. Da die Scheibe 205 auf dem Auflagetisch 202 aufliegt, müssen untere Klemmbacken der Greifer 204 in Nuten 206 im Auflagetisch 202 laufen. Mit den Greifern 204 kann die Scheibe 205, nachdem sie mit geeigneten Transportmitteln wie Transportrollen oder Transportbändern auf den Auflagetisch 202 gefördert wurde oder manuell mit Aufstellarmen 207 aufgelegt wurde, gegriffen und auf die Schneidbrücke 203 hingeschoben werden.

Eine derartige Verbundglasschneidanlage ist beispielsweise auch aus der DE 32 30 554 A1 bekannt. Nach dem Schneiden beziehungsweise Ritzen mit einer Schneidbrücke werden die Glasscheiben entlang der Ritzlinie geknickt, um einen durchgehenden Riss im Bereich der Ritzlinie zu erzeugen. Anschließend oder dabei werden die Glasplatten auseinandergezogen und die Folie im Spalt durch Hitzeeinwirkung abgeschmolzen beziehungsweise getrennt. Bei derartigen bekannten Verbundglasschneidanlagen ist von Nachteil, dass sie neben einer erheblichen Baulänge eine aufwendige Transporttechnik erfordern, wobei die Verbundglasscheiben nur entlang gerader Linien parallel zu den Tischkanten beziehungsweise Glaskanten schneidbar und trennbar sind.

Die EP 0 835 847 A1 beschreibt eine Vorrichtung zum Schneiden von aufrecht stehenden Verbundglastafeln, mit der eine Verbundglastafel beidseitig entlang von geraden Linien angeritzt werden kann. Dazu weist die Vorrichtung gemäß der EP 0 835 847 A1 eine feststehende, vertikal ausgerichtete Schneidbrücke auf, an der beidseitig einer zu schneidenden Verbundglastafel jeweils ein ein Schneidrädchen aufweisendes Schneidwerkzeug vertikal beweglich geführt ist. Zusätzlich ist in Förderrichtung der Glastafel gesehen hinter der Schneidbrücke eine Positionierbrücke mit Greifern vorhanden, mit denen die Glastafel an einem der Schneidbrücke abgewandten Randbereich gegriffen und durch Bewegung der Positionierbrücke geschoben oder gezogen werden kann, wobei die Positionierbrücke gemäß der EP 0 835 847 A1 zum Positionieren der Verbundglastafel zwischen der Schneidbrücke vor dem Schneiden dient. Während des Schneidvorgangs selbst ist die Verbundglastafel festgeklemmt und bewegt sich nicht.

Die DE 198 22 282 C1 beschreibt eine Vorrichtung zum Schneiden von Verbundglas, Konturenschneiden von Flachglas und Markieren von Durchbrüchen in geschnittenen Glasflächen. Die Vorrichtung weist gemäß der DE 198 22 282 C1 oberseitig einer zu schneidenden Glastafel einen Schneidkopfhalter auf, der an einer einen horizontalen Tisch brückenartig überspannenden Konsole in deren Längsrichtung (Y-Richtung) beweglich geführt ist, wobei die Konsole selbst in einer Tischlängsrichtung (X-Richtung) über die Glastafel hinweg verfahrbar ist. Am Schneidkopfhalter ist ein Schneidkopf um eine vertikale Z-Achse drehbar gelagert und an dem Schneidkopf ist ein Schneidrad um eine horizontale Achse drehbar angeordnet. Unterseitig einer zu schneidenden Glastafel weist die Vorrichtung gemäß der DE 198 22 282 C1 eine zweite Schneideinrichtung bestehend aus einem unteren Schneidkopfhalter und einem unteren Schneidkopf auf, die an einem,in Y-Richtung verlaufenden Träger des Tischgestells in Längsrichtung des Trägers derart beweglich geführt ist, dass beim Schneiden von Verbundglastafeln der obere Schneidkopf vertikal fluchtend zum unteren Schneidkopf angeordnet ist und der obere Schneidkopf und der untere Schneidkopf synchron und zueinander geradlinig geführt sind. Die zweite Schneideinrichtung ist nicht um eine vertikale Z-Achse drehbar gelagert. Die Vorrichtung gemäß der DE 198 22 282 C1 ermöglicht das Konturenschneiden von Flachglas und das geradlinige Schneiden von Verbundglas.

In der EP 1 118 592 A1 wird eine Vorrichtung zum Schneiden von Verbundglastafeln beschrieben, die einen Auflagetisch zum Auflegen von Verbundglastafeln und eine Verbundglasschneideinrichtüng aufweist, wobei die Verbundglasschneideinrichtung eine sich jeweils über die Breite des Auflagetisches auf Höhe einer Seite des Auflagetisches sich erstreckende obere und untere Schneidbrücke aufweist. Die Schneidbrücken dienen zum Schneiden oder Ritzen der Verbundglastafel und sind übereinander angeordnet. Zudem weisen die beiden Schneidbrücken jeweils einen Schneidkopf auf, wobei die Schneidköpfe entlang der jeweiligen Schneidbrücke verfahrbar sind. Des Weiteren weist die Vorrichtung gemäß der EP 1 118 592 A1 eine über dem Auflagetisch zur Schneidbrücke gegenläufig hin- und zurückfahrbar angeordnete Verfahr- bzw. Positionierbrücke zum Verschieben und Positionieren der Verbundglastafel auf dem Auflagetisch auf, wobei die Positionierbrücke einen um eine zur Verbundglastafel senkrechte Hochachse drehbaren Sauggreifer aufweist, mit dem die Verbundglastafel von oben gegriffen wird und der zum Drehen, Ausrichten und Verschieben der Verbundglastafel auf dem Auflagetisch dient, unter anderem um diese auch entlang von abgewinkelten und gebogenen Linien schneiden zu können. Dies erfolgt gemäß der EP 1 118 592 A1 durch eine Kombination der Rotation eines Greifkopfes des Sauggreifers um eine zur Glastafelebene senkrechte Achse, einer translatorischen Bewegung in Tischlängsrichtung der Positionierbrücke und einer dazu senkrechten Bewegung translatorischen Bewegung der Schneidköpfe.

Aufgabe der Erfindung ist es, eine Verbundglasschneidanlage zu schaffen, die kürzer und bezüglich der Transporttechnik einfacher aufgebaut ist und mit der beliebige Schnitte ausgeführt werden können. Zudem soll ein Verfahren zum Konturenschneiden in Verbundglas bereit gestellt werden.

Die Aufgaben werden mit einer Verbundglasschneidanlage mit den Merkmalen des Anspruchs 1 und einem Verfahren mit den Merkmalen des Anspruchs 18 gelöst. Vorteilhafte Weiterbildungen sind in den abhängigen Unteransprüchen gekennzeichnet.

Es ist vorteilhaft, eine Positionierbrücke vorzusehen, die beidseitig Greifer besitzt, so dass die Glasplatten sowohl gezogen als auch geschoben werden können. Hierdurch ergibt sich in überraschender Weise eine signifikante Verkürzung der Baulänge. Ferner kann eine Glasplatte aktiv auf den Auflagetisch gezogen werden, so dass vorgeschaltete Transporteinrichtungen vereinfacht oder weggelassen werden können. Ferner wird eine genauere Positionierung und Kantenparallelität erzielt.

Die Erfindung sieht vor, die Schneid- beziehungsweise Ritzeinrichtungen an der Schneidbrücke um eine vertikale Achse drehbar und entlang der Schneibrücke verfahrbar auszubilden. In Verbindung mit der Positionierbrücke sind hiermit beliebige, auch runde oder gekrümmte Schnitte möglich, dies insbesondere auch automatisiert rechnergesteuert.

Die Erfindung wird anhand einer Zeichnung beispielhaft näher erläutert. Es zeigen dabei:

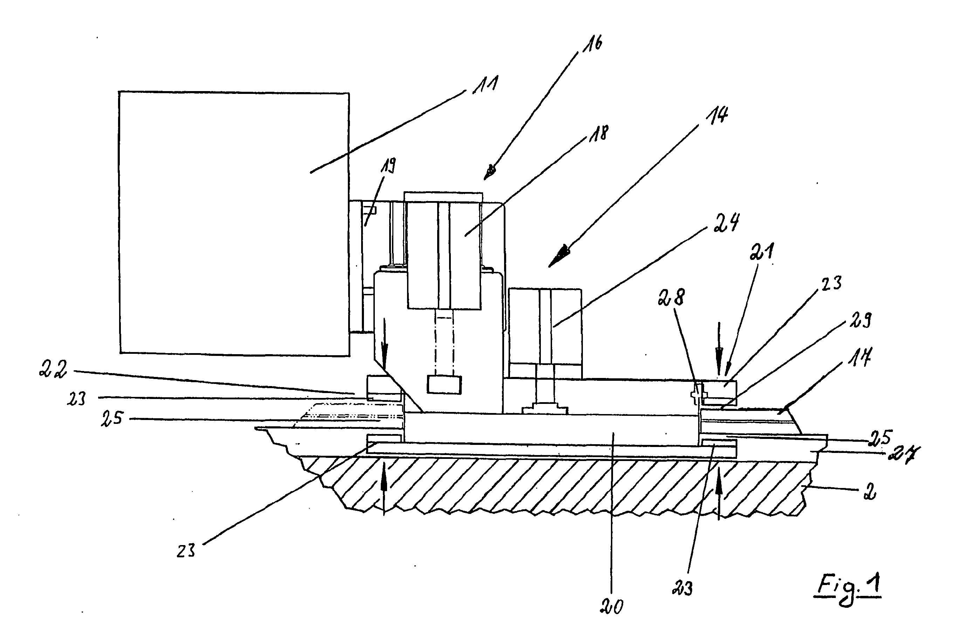

- Fig. 1: einen Doppelgreifer an einer verfahrbaren Positionier- brücke in einer schematischen Seitenansicht;

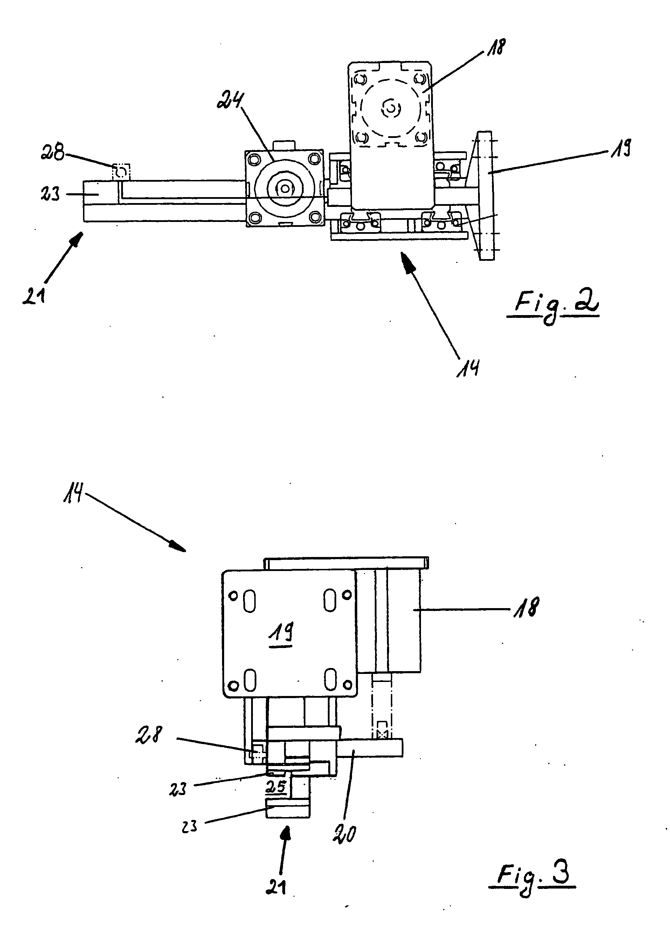

- Fig. 2: einen Doppelgreifer nach Fig. 1 in einer schematischen Draufsicht;
- Fig. 3: einen Doppelgreifer nach Fig. 1 in einer schematischen brückenseitigen Ansicht normal zu den Ansichten nach Fig. 1 und 2;
- Fig. 4: eine erfindungsgemäße Verbundglasschneidanlage in ei- ner schematisierten Draufsicht, wobei eine Glastafel mittels vorderer Greifer geschoben wird;
- Fig. 5: eine Verbundglasschneidanlage in einer Draufsicht mit einer auf die Aufstellarme aufgelegten Glasplatte;
- Fig. 6: eine Verbundglasschneidanlage nach Fig. 5 mit einer in einer ersten Schneidposition verfahrenen Scheibe oder Platte;
- Fig. 7: eine Verbundglasschneidanlage nach Fig. 5 mit einer durch die Positionierbrücke zurückgezogenen geschnit- tenen Platte, wobei ein abgeschnittenes Plattenstück hinter der Schneidbrücke verbleibt;

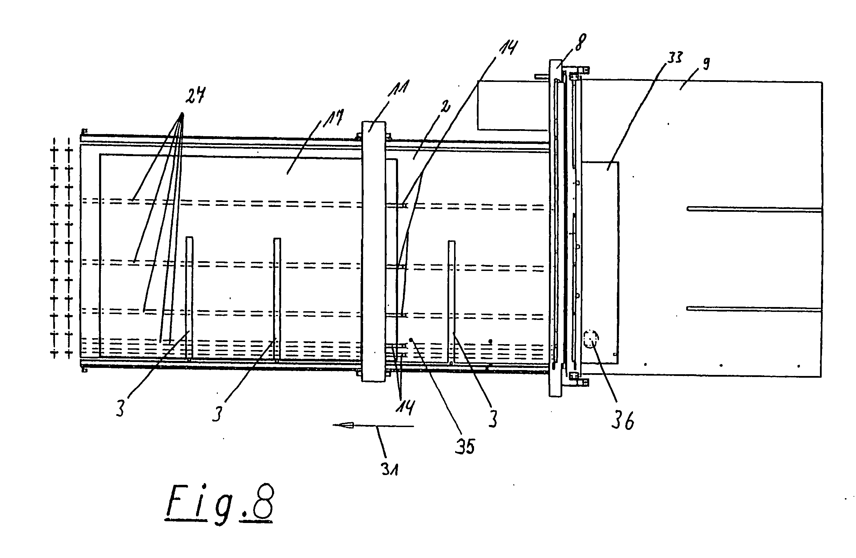

- Fig. 8: die Verbundglasschneidanlage nach Fig. 7, wobei die Positionierbrücke über die Scheibe gefahren und die Scheibe mit den rückwärtigen Greifern geklemmt und von der Schneidbrücke weggeschoben wird;
- Fig. 9: eine Verbundglasschneidanlage nach Fig. 8, bei der die geschnittenen Plattenteile mittels einer Drehung zum weiteren Schneiden um 90° gedreht werden;
- Fig. 10: eine Verbundglasschneidanlage nach Fig. 9 nach erfolg- tem Schnitt, wobei die Positionierbrücke die kleine Glastafel für den nächsten Schnitt positioniert;
- Fig. 11: eine Verbundglasschneidanlage nach Fig. 10, wobei die große Glastafel für den nächsten Schnitt mit hinteren Greifern vorgezogen wird;
- Fig. 12: eine Verbundglasschneidanlage nach Fig. 11, wobei die Glastafel von der Positionierbrücke überfahren und dann geschoben wird;

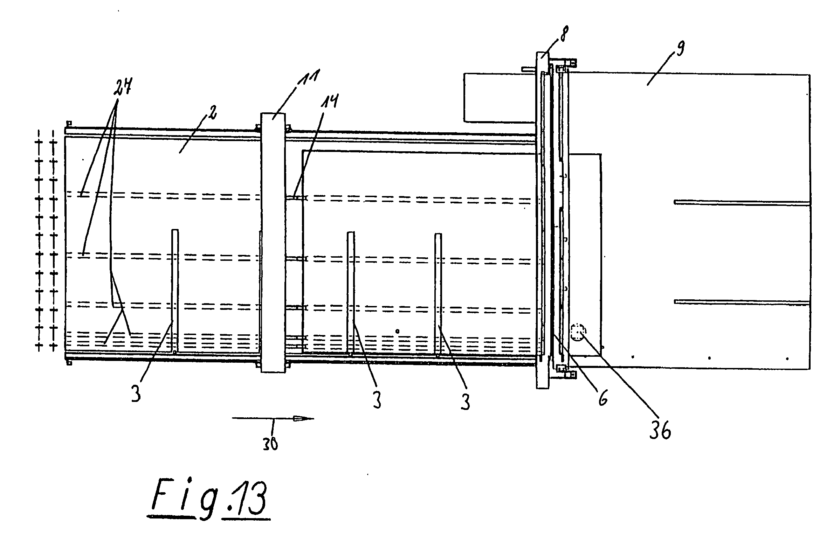

- Fig. 13: eine Verbundglasschneidanlage nach Fig. 12 mit einer in Schneidposition geschobenen großen Glastafel;

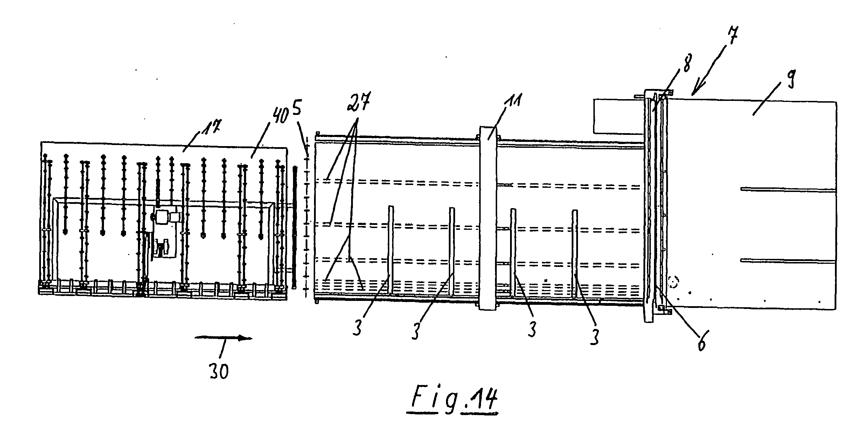

- Fig. 14: eine Verbundglasschneidanlage nach Fig. 4 mit einem vorgeschalteten Beschicker;
- Fig.: 15 die Verbundglasschneidanlage nach Fig. 14 mit einer teilweise auf den Auflagetisch geförderten Glasplatte;
- Fig. 16: die Verbundglasschneidanlage nach Fig. 15, wobei die Glasplatte von der Positionierbrücke gegriffen ist;
- Fig. 17: die Verbundglasschneidanlage nach Fig. 16, wobei die Glasplatte von der Positionierbrücke zur Schneidbrücke vom Beschicker gezogen wird;
- Fig.: 18 feine erfindungsgemäße Verbundglasschneidanlage in ei- ner Draufsicht für einen Vergleich der Baulänge;
- Fig. 19: eine Verbundglasschneidanlage nach dem Stand der Tech- nik;

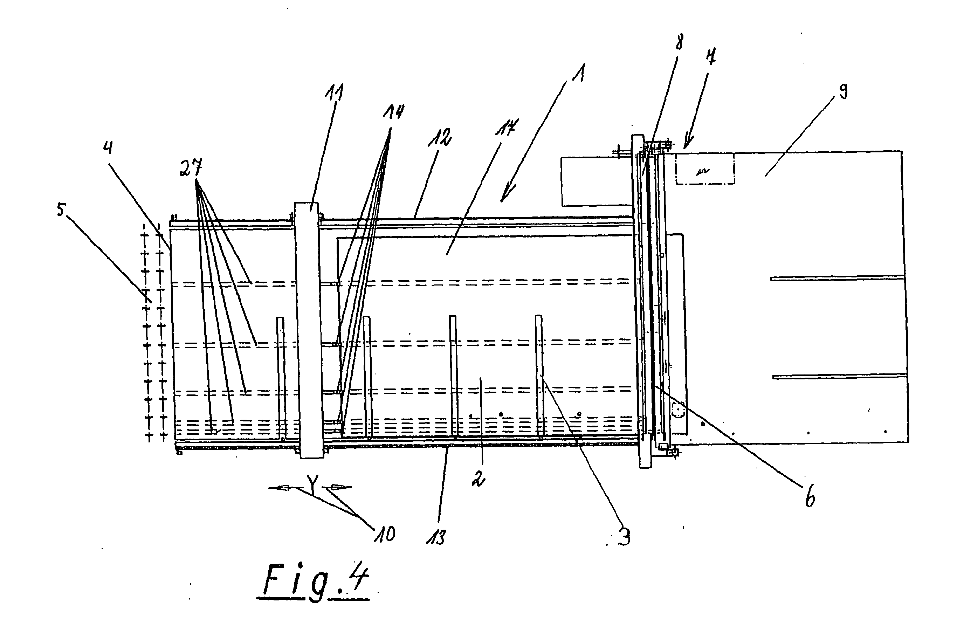

Eine erfindungsgemäße Verbundglasschneidanlage 1 (Fig. 4) besitzt einen Lufkissenbrückentisch 2 mit an sich bekannten Aufstellarmen 3 für eine manuelle Beschickung. An einer Schmalseite beziehungsweise Beschickungsseite 4 des Luftkissenbrückentisches 2 ist im Luftkissenbrückentisch 2 eine Beschickungseinheit 5 (angedeutet) vorhanden. An der gegenüberliegenden Schmalseite 6 (Schneidseite) ist eine Verbundglasschneidanlage 7 vorhanden. Die Verbundglasschneideinrichtung 7 besitzt eine über die Breite des Luftkissenbrückentisches 2 auf Höhe der Schmalseite 6 sich erstreckende Schneidbrücke 8 sowie einen Bearbeitungstisch 9, der mit einem Spalt (nicht gezeigt) an die Schmalseite 6 angesetzt ist. Zwischen der Schmalseite 4 und der Schneidbrücke 8 ist in Tischlängsrichtung 10 (Y-Richtung) eine Positionierbrücke 11 verfahrbar angeordnet. Die Positionierbrücke 11 überspannt den Luftkissenbrückentisch 2 und ist an dessen Längskanten 12, 13 verschieblich antreibbar gelagert.

An der Positionierbrücke 11 sind eine Mehrzahl von Greifeinrichtungen 14 ausgebildet. Die Greifeinrichtungen 14 sind bezüglich der Längserstreckung der Positionierbrücke 11 mit unregelmäßigen Abständen zueinander angeordnet, wobei zum Greifen von unterschiedlich breiten Glastafeln beziehungsweise - platten 17 die Abstände zwischen den Greifeinrichtungen 14 von der Längskante 13 zur Längskante 12 hin weiter werden. Die Abstände zwischen den Greifeinrichtungen 14 sind insbesondere auf Standardformate abgestimmt.

Die Greifeinrichtungen 14 (Fig. 4) sind an einer der Schneidbrücke 8 zugewandten Fläche oder Wandung 15 an der Positionierbrücke 11 angeordnet, insbesondere angeschraubt. Der Wandung 15 benachbart ist eine Hubeinrichtung 16 zum Anheben der Greifeinrichtung 14 über das Niveau einer Glastafel 17 vorhanden. Die Hubeinrichtung 16 ist beispielsweise eine mit einer pneumatischen Kolbenzylindereinheit 18 zwischen einer Befestigungseinrichtung 19 und der übrigen Greifeinrichtungen 14 angeordnete Hubeinrichtung 16.

Die Greifeinrichtung 14 weist einen länglichen Greiferträger 20 auf. Der Greiferträger 20 ist mit der Hubeinrichtung 16 anhebbar und absenkbar verbunden. An dem Greiferträger 20 sind endseitig Greifer 21, 22 mit Greifpratzen 23 ausgebildet, wobei ein Greifer 21 der Positionierbrücke 11 abgewandt ist und ein Greifer 22 der Positionierbrücke 11 zugewandt und schräg unterhalb von dieser angeordnet ist.

Die Greifer 21, 22 sind in an sich bekannter Weise ausgebildet und werden mit einer Betätigungseinrichtung 24, insbesondere einer Kolbenzylindereinheit 24 betätigt. Für jeden Greifer 21, 22 kann eine Betätigungseinrichtung 24 vorhanden sein, es können aber auch beide Greifer 21, 22 mit einer einzigen Betätigungseinrichtung 24 betätigt werden.

Zum Schließen und Öffnen der Greifmäuler 25 werden beide Pratzen 23 aufeinander zugefahren. Eine untere Pratze 23 befindet sich somit zwangsläufig unterhalb des Niveaus einer auf dem Tisch 2 aufliegenden Scheibe. Der Tisch 2 besitzt entlang seiner Längserstreckung fluchtend mit der Bewegungsbahn der Greifereinrichtungen 14 Nuten 27. Benachbart zu den Greifern 21, 22 sind an der Greifeinrichtung 14 Sensoren 28 vorhanden. Die Sensoren 28 dienen der Erfassung einer definierten Greiftiefe. Die Greiftiefe ist dabei so bemessen, dass die Pratzen 23 eine Tafel 17 nur in entschichteten Randbereichen 29 greifen.

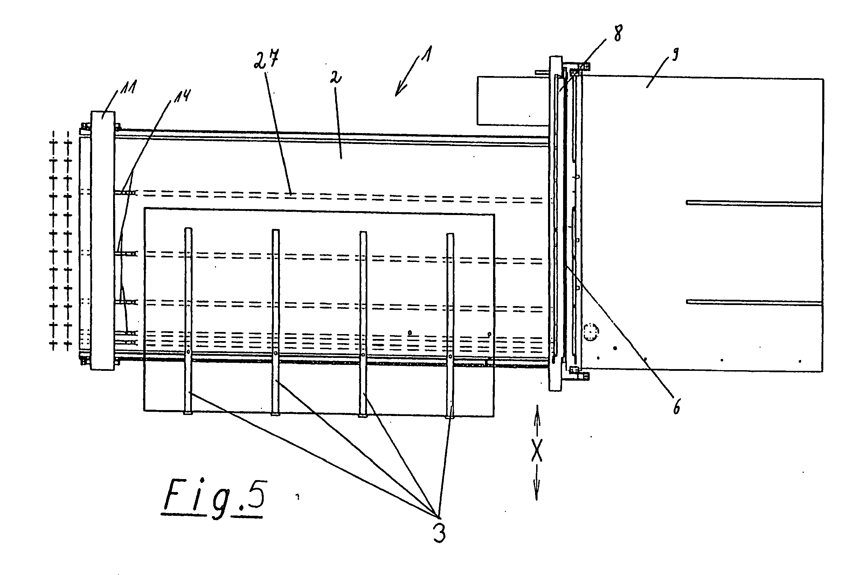

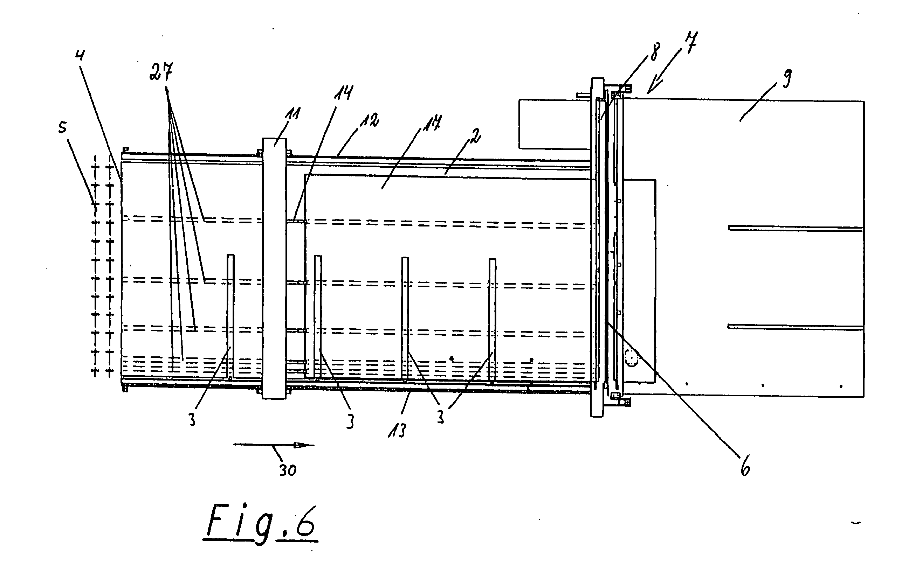

Im folgenden wird die Funktionsweise der erfindungsgemäßen Vorrichtung erläutert:
Eine Glastafel 17 kann über die Aufstellarme 3 (Fig. 5) auf den Luftkissenbrückentisch 2 aufgelegt werden, so dass die Glastafel 17 zwischen die Positionierbrücke 11 und die Schneidbrücke 8 gelangt. Die Glastafel 17 wird mit den vorderen Greifern 21 (Fig. 6) im entschichteten Randbereich gegriffen und entlang der Förderrichtung (Pfeil 30) unter die Schneidbrücke 8 gefördert, bis bezogen auf die Förderrichtung 30 hinter der Schneidbrücke 8 eine Scheibenfläche zu liegen kommt, die einer abzuschneidenden Scheibenfläche entspricht.

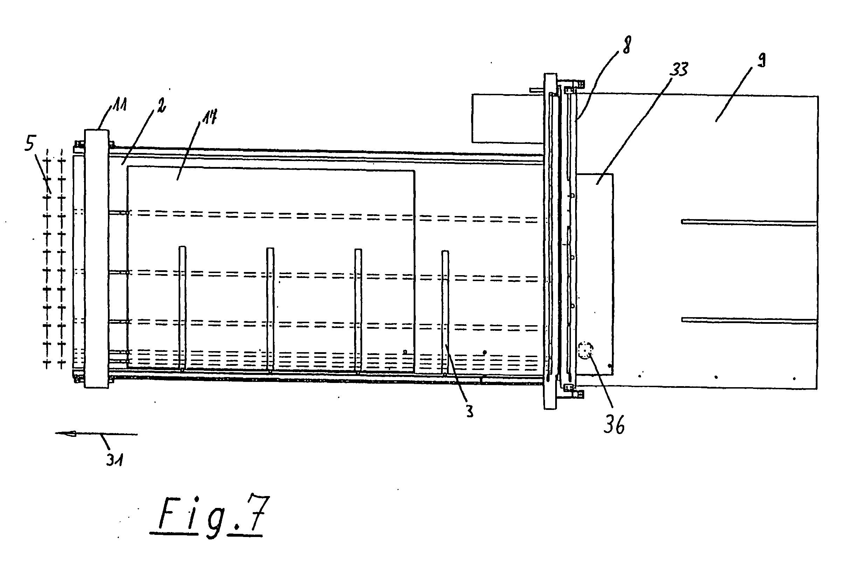

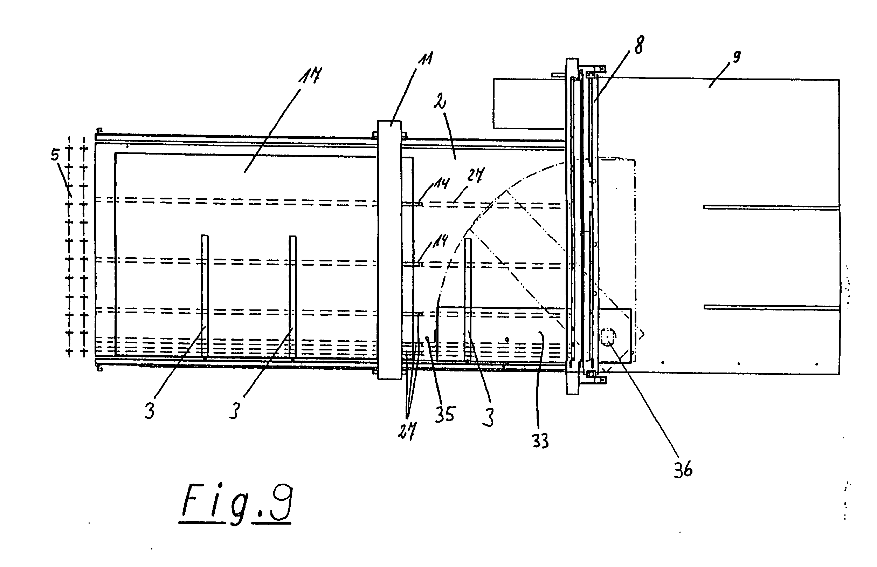

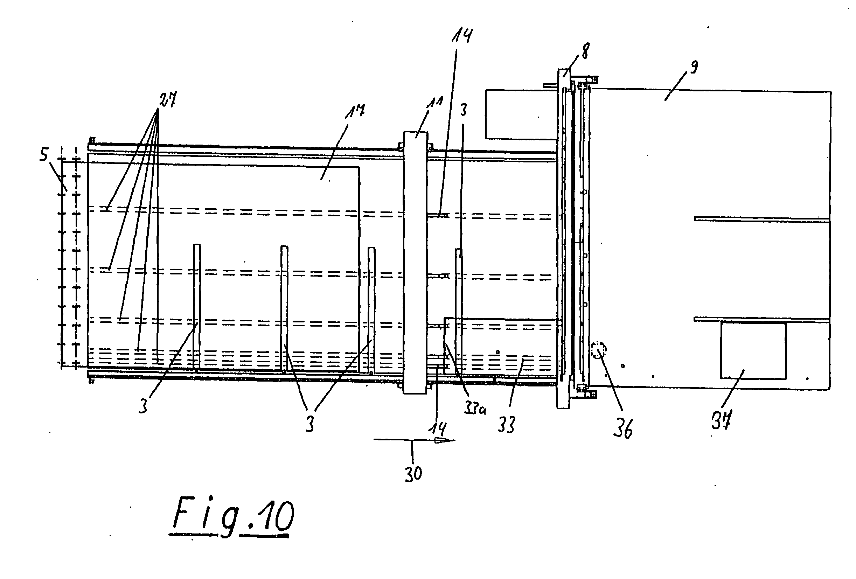

Nach dem Schneiden (Fig. 7) wird die Glasplatte von der Positionierbrücke 11 und den immer noch an der Glastafel angreifenden vorderen Greifern 21 entgegen der Förderrichtung (Pfeil 31) von der Schneidbrücke 8 weggezogen. Gegenüberliegend von der Positionierbrücke 11 verbleibt ein geschnittener Glastafelabschnitt 33 auf dem Bearbeitungstisch 9. Für nachfolgende Schneidschritte an dem geschnittenen Glastafelabschnitt 33 muss die Glastafel 17 von der Schneidbrücke 8 weg verfahren werden, wobei in einem hinteren Anschlag der Positionierbrücke 11 (Fig. 7) die vorderen Greifer 21 die Glastafel 17 loslassen und anschließend über die Glastafel 17 auf die Schneidbrücke 8 zu verfahren werden, wobei die Greifer mit der Einrichtung 16 über die Glastafel 17 angehoben sind. Ist die Positionierbrücke 11 über die Glastafel 17 hinweggefahren, werden die Greifeinrichtungen 14 wieder in die Nuten 27 abgesenkt und die Glastafel 17 mit den rückwärtigen Greifern 22 in entschichteten Randbereichen gegriffen und weiter entlang der Gegenföderrichtung (Pfeil 31) von der Schneidbrücke 8 weggefördert, bis ein Sensor 35 frei wird. Um den geschnittenen Glastafelabschnitt 33 weiter zu zerteilen, wird er von einem Drehsaugteller 36 von unten angesaugt und anschließend um 90° unter der Schneidbrücke 8 hindurch auf den Luftkissenbrückentisch 2 gedreht (Fig. 9). Um den Glastafelabschnitt 33 in die jeweiligen Schneidpositionen zu fahren, um ihn in kleinere Tafeln oder Scheiben 37 zu zerteilen, wird die Glastafel 17 von den hinteren Greifern 22 losgelassen und die Positionierbrücke 11 auf den Glastafelabschnitt 33 zugefahren und mit einer Anzahl von Greifern 21 an seiner der Schneidbrücke 8 abgewandten Schmalseite 33a mit Greifern 21 gegriffen, wobei die Anzahl der Greifer 21 auf die Breite des Glastafelabschnitts 33 beziehungsweise die Länge der Schmalseite 33a abgestimmt ist. Anschließend wird die Positionierbrücke mit dem Glastafelabschnitt 33 entlang der Förderrichtung 30 unter die Schneidbrücke 8 gefahren und von dem Glastafelabschnitt 33 ein entsprechendes Stück 37 abgeschnitten und weiter auf den Bearbeitungstisch 9 gefördert (Fig. 10).

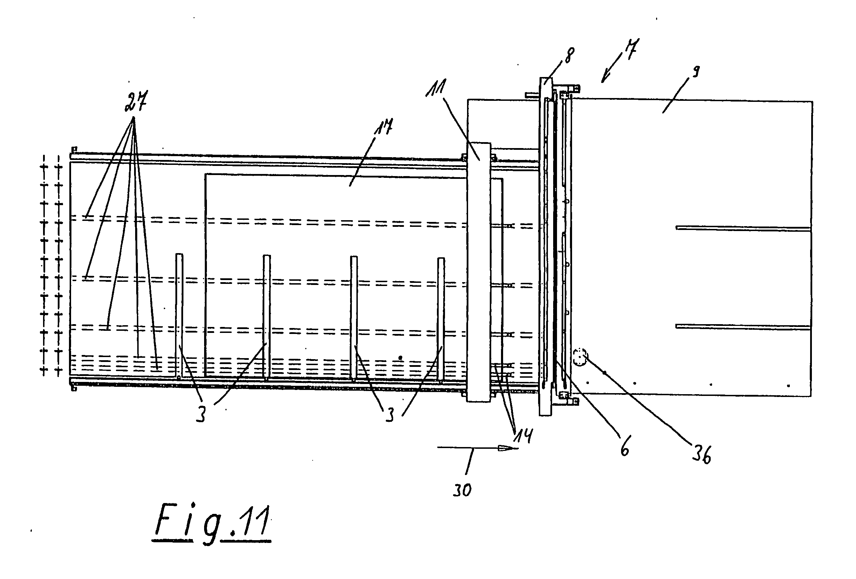

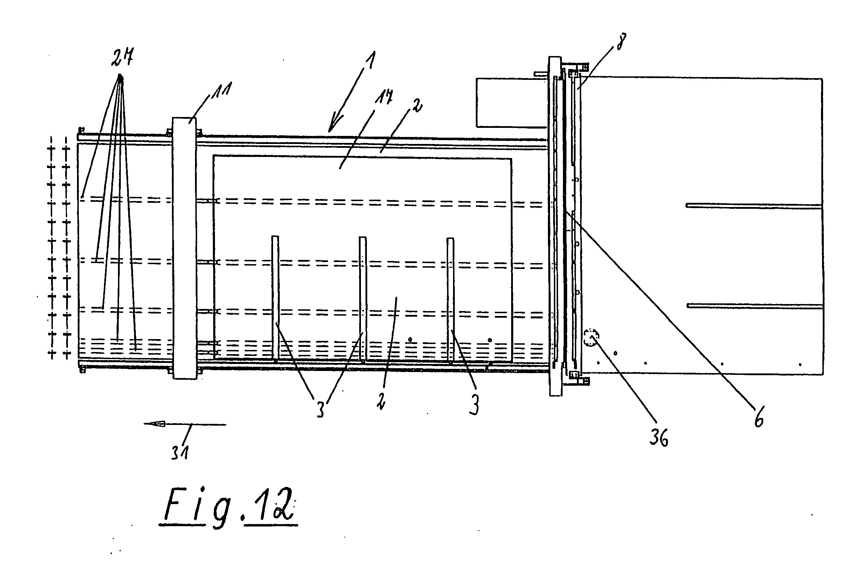

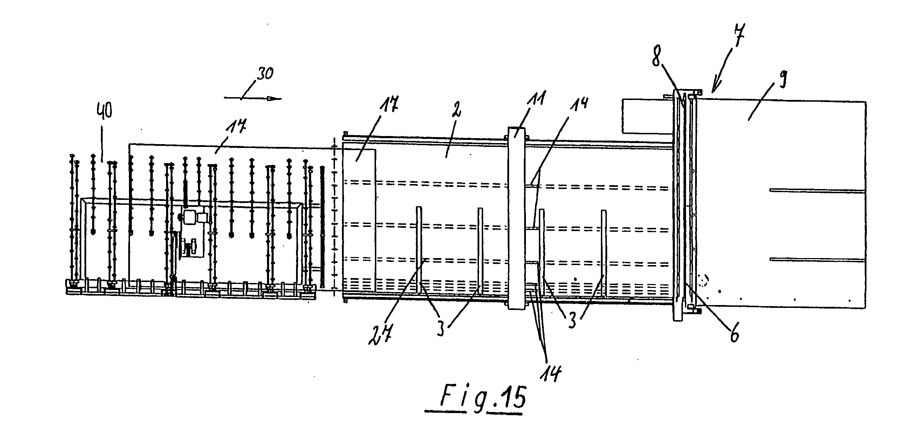

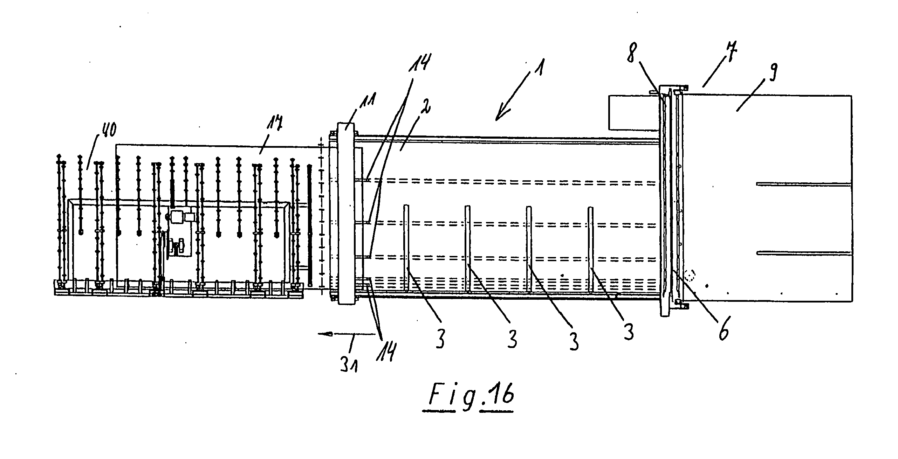

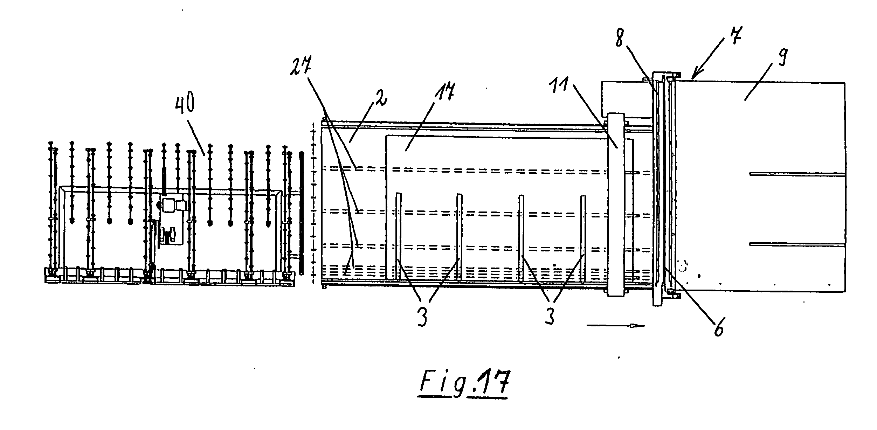

Nachdem der Glastafelabschnitt 33 in Stücke 37 zerschnitten worden ist, wird zum weiteren Zerschneiden der Glastafel 17 die Positionierbrücke 11 gegen die Förderrichtung zur Tafel 17 gefahren und die Tafel 17 mit hinteren Greifern 22 gegriffen und zur Schneidbrücke 8 entlang der Förderrichtung 30 vorgezogen (Fig. 11). Um die Glastafel 17 unter der Schneidbrücke 8 zu positionieren, wird die Positionierbrücke 11 über die Glastafel 17 in Gegenföderrichtung 31 verfahren, wobei die gesamte Greifeinrichtung 14 mit der Einrichtung 16 angehoben ist. In Gegenförderrichtung 31 hinter der Tafel 17 wird die Greifereinrichtung 14 wieder in die Nuten 27 abgesenkt und auf die Tafel 17 zugefahren, bis die vorderen Greifer 21 die Tafel 17 greifen (Fig. 12). Anschließend wird die Glastafel 17 entlang der Förderrichtung 30 wieder unter die Schneidbrücke 8 gefahren, bis ein gewünschtes Plattenstück auf den Bearbeitungstisch 9 hinaussteht. Einer derartigen Schneidanlage kann beispielsweise eine automatische Beschickung 40 vorgeschaltet i sein, wobei die automatische Beschickung 40 beispielsweise ein Rollenförderer mit Kipparmen 40 sein kann, der über Rollen eine große Glastafel 17 auf den Luftkissenbrückentisch 2 entlang der Förderrichtung 30 auffördern kann. Die Förderung erfolgt dabei solange (Fig. 15), bis ein Teil der Glastafel 17 vom Rollenförderer 40 auf den Luftkissenbrückentisch 2 gefördert ist. Auf dem Luftkissenbrückentisch 2 (Fig. 16) wird die Positionierbrücke 11 in Gegenförderrichtung 31 auf die Tafel 17 zu verfahren, bis die Greifer 22 die Tafel 17 greifen und anschließend entlang der Förderrichtung 30 auf die Schneidbrücke 8 zu verfahren (Fig. 17)

Bei der Erfindung sind an der Schneidbrücke sowohl ober- als auch unterseitig Schneidrädchen angeordnet, die um eine Achse normal zur Fläche der Glastafel 17 drehbar antreibbar sind. Diese Schneidrädchen sind somit in der Lage, nicht nur entlang der Schneidbrücke 8, d. h. quer zur Glastafel 17 zu schneiden, sondern können in jede Richtung schneiden. Zusammen mit der erfindungsgemäß ausgebildeten Positionierbrücke 11 können hierdurch beliebige Konturen geschnitten werden, da abhängig von der Vorschub- oder Rückzugsgeschwindigkeit sowie der Voschubgeschwindigkeit des Schneidrädchens und der Richtung des Schneidrädchens jeder beliebige Schnitt auf einer Tafel 17 durchführbar ist. Hiermit ist es somit erfindungsgemäß erstmals möglich, bei Verbundglas beliebige Konturen vollautomatisiert zu schneiden.

Bei der Erfindung ist von Vorteil, dass sie eine verkürzte Baulänge (Fig. 18, 19) aufweist, wobei durch die spezielle Ausbildung der Greifer das Zuführen einer Glasplatte zu einer Schneideinrichtung und das Wegziehen derselben von der Schneideinrichtung erheblich schneller vonstatten gehen kann, was höhere Taktzeiten erlaubt. Ferner ermöglicht die erfindungsgemäße Verbundglasschneidanlage einen einfacheren Aufbau, da auf dem Luftkissenbrückentisch keine zusätzlichen Förderer benötigt werden.

Darüber hinaus ist von Vorteil, dass bei einem um eine Achse normal zur Glasplattenfläche drehbaren Schneidrädchen in Verbindung mit einer Positionierbrücke, insbesondere rechnergesteuert jede beliebige Kontur mit Verbundglas geschnitten werden kann. Bislang wurden derartige Schnitte manuell erzeugt, wobei die Glasplatte zunächst auf einer Seite geschnitten wurde, dann gedreht wurde und dann auf der anderen Seite geschnitten wurde. Dies hatte erhebliche Ungenauigkeiten und einen sehr großen Zeitaufwand zur Folge, welche beziehungsweise welcher mit der Erfindung vermieden wird.

## Patentansprüche

1. Vorrichtung zum Schneiden einer Verbundglastafel (17) mit einem Auflagetisch (2) zum Auflegen von Verbundglastafeln (17), einer über dem Auflagetisch (2) in Tischlängsrichtung (10) vor- und zurück verfahrbar angeordneten Positionierbrücke (11) zum Verschieben einer Verbundglastafel (17) vor- und zurück in Tischlängsrichtung (10) auf dem Auflagetisch (2) und einer Verbundglasschneideinrichtung (7) mit Schneidwerkzeugen zum Schneiden oder Ritzen der Verbundglastafel (17), wobei
die Verbundglasschneideinrichtung (7) eine Schneidbrücke (8) besitzt, wobei an der Schneidbrücke (8) ober- und unterseitig der zu bearbeitenden Verbundglastafel (17) zumindest je ein Schneidwerkzeug vorhanden ist,
**dadurch gekennzeichnet, dass**
die Schneidwerkzeuge Schneidrädchen sind, die um eine Achse senkrecht zur Schneidrichtung und parallel zur Glastafelebene frei oder angetrieben drehbar und um eine Achse senkrecht zur Glastafelebene angetrieben drehbar sind und entlang der Schneidbrücke (8) quer zur Förderrichtung der Verbundglastafel (17) bewegbar sind, so dass abhängig von der Vorschub- oder Rückzugsgeschwindigkeit der Positionierbrücke (11) sowie der Vorschubgeschwindigkeit und der Richtung der Schneidrädchen beliebige Schnittkonturen geschnitten werden können.

2. Vorrichtung nach Anspruch 1,
**dadurch gekennzeichnet, dass**
an der Positionierbrücke (11) eine Greifeinrichtung (14) vorhanden ist, die derart ausgebildet ist, dass, bezogen auf die gegenläufigen Bewegungsrichtungen (30, 31) der Positionierbrücke (11) eine Verbundglastafel (17) von jeder der Richtungen aus greifbar ist.

3. Vorrichtung nach Anspruch 1 und/oder 2,
**dadurch gekennzeichnet, dass**
die Greifeinrichtung (14) einen, bezogen auf die Auflagetischebene, um die Hochachse drehbaren Greifer (21, 22) besitzt, der in verschiedene Greifrichtungen drehbar ausgebildet ist.

4. Vorrichtung nach Anspruch 1 und/oder 2,
**dadurch gekennzeichnet, dass**
an der Positionierbrücke (11) eine Mehrzahl von Greifeinrichtungen (14) vorhanden sind, wobei bezogen auf die Bewegungsrichtungen (30, 31) der Positionierbrücke (11) entlang der Längserstreckung des Auflagetisches (2) zumindest ein vorderer Greifer (21) und zumindest ein hinterer Greifer (22) vorhanden sind, so dass die Verbundglastafeln (17) alternativ an gegenüberliegenden Kanten gegriffen werden können und sowohl gezogen als auch geschoben werden können.

5. Vorrichtung nach Anspruch 4,
**dadurch gekennzeichnet, dass**
an der Positionierbrücke (11) entlang der Längserstreckung des Auflagetisches (2) an jeder Greifeinrichtung (14) zumindest ein vorderer Greifer (21) und zumindest ein hinterer Greifer (22) vorhanden sind.

6. Vorrichtung nach Anspruch 4 und/oder 5,
**dadurch gekennzeichnet, dass**
die Greifeinrichtungen (14) bezüglich der Längserstreckung der Positionierbrücke (11) mit unregelmäßigen Abständen zueinander angeordnet sind, wobei zum Greifen von unterschiedlich breiten Verbundglastafeln (17) die Abstände zwischen den Greifeinrichtungen (14) von einer Längskante (13) des Auflagetisches (2) zu einer gegenüberliegenden Längskante (12) hin weiter oder enger werden.

7. Vorrichtung nach einem der Ansprüche 4 bis 6,
**dadurch gekennzeichnet, dass**
die Abstände zwischen den Greifeinrichtungen (14) auf Standardformate von Verbundglastafeln (17) abgestimmt sind.

8. Vorrichtung nach einem der Ansprüche 4 bis 7,
**dadurch gekennzeichnet, dass**
die Greifeinrichtungen (14) eine Hubeinrichtung (16) zum Anheben der Greifeinrichtung (14) über das Niveau einer Verbundglastafel (17) aufweisen, so dass die Positionierbrücke (11) mit angehobenen Greifeinrichtungen (14) die Verbundglastafel (17) überfahren kann.

9. Vorrichtung nach Anspruch 8,
**dadurch gekennzeichnet, dass**
die Hubeinrichtung (16) eine pneumatische oder hydraulische Kolbenzylindereinheit (18) oder eine elektromotorische Verstelleinrichtung aufweist, die zwischen einer Befestigungseinrichtung (19) und der übrigen Greifeinrichtung (14) angeordnet ist.

10. Vorrichtung nach Anspruch 8 und/oder Anspruch 9,
**dadurch gekennzeichnet, dass**
die Greifeinrichtung (14) einen länglichen Greiferträger (20) aufweist, wobei der Greiferträger (20) mit der Hubeinrichtung (16) anhebbar und absenkbar verbunden ist, wobei an dem Greiferträger (20) endseitig die Greifer (21, 22) mit Greifpratzen (23) ausgebildet sind, wobei die durch die Greifpratzen (23) gebildeten Greifmäuler (25) der Greifer (21) zur Schneidbrücke (8) und die Greifmäuler (25) der Greifer (22) von der Schneidbrücke (8) wegweisen.

11. Vorrichtung nach einem der Ansprüche 3 bis 10,
**dadurch gekennzeichnet, dass**
die Greifer (21, 22) je eine Betätigungseinrichtung (24) zum Öffnen und Schließen der Greifmäuler (25) aufweisen.

12. Vorrichtung nach Anspruch 11,
**dadurch gekennzeichnet, dass**
die Betätigungseinrichtung (24) eine pneumatische oder hydraulische Kolbenzylindereinheit (24) oder eine elektronmotorische Stelleinheit (24) ist.

13. Vorrichtung nach einem der Ansprüche 3 bis 12,
**dadurch gekennzeichnet, dass**
jeder Greifer (21, 22) eine eigene Betätigungseinrichtung (24) besitzt.

14. Vorrichtung nach einem der Ansprüche 3 bis 12,
**dadurch gekennzeichnet, dass**
die Greifer (21, 22) einer Greifeinrichtung (14) mit einer einzigen Betätigungseinrichtung (24) betätigt werden.

15. Vorrichtung nach einem der Ansprüche 4 bis 14,
**dadurch gekennzeichnet, dass**
der Auflagetisch (2) entlang seiner Längserstreckung fluchtend mit der Bewegungsbahn der Greifeinrichtungen (14) Nuten (27) für unter dem Niveau einer Verbundglastafel (17) angeordnete Teile der Greifeinrichtungen (14) aufweist.

16. Vorrichtung nach einem der Ansprüche 3 bis 15,
**dadurch gekennzeichnet, dass**
benachbart zu den Greifern (21, 22) an der Greifeinrichtung (14) Sensoren (28) vorhanden sind, welche eine definierte Greiftiefe erfassen, wobei der Abstand der Sensoren (28) zur Öffnung der Greifmäuler (25) derart festgelegt ist, dass die Greifpratzen (23) der Greifer (21, 22) eine Verbundglastafel (17) nur in entschichteten Randbereichen (29) ergreifen.

17. Vorrichtung nach einem der Ansprüche 3 bis 16,
**dadurch gekennzeichnet, dass**
dem Auflagetisch (2) eine Beschickereinheit (40) vorgeordnet angeordnet ist, mit der eine Verbundglastafel (17) auf den Auflagetisch (2) förderbar ist, bis die Verbundglastafel (17) von einem Greifer (21) greifbar ist.

18. Verfahren zum Konturenschneiden von Verbundglastafeln (17) unter Verwendung einer Vorrichtung nach einem oder mehreren der Ansprüche 1 bis 17, wobei die Konturen gleichzeitig sowohl ober- als auch unterseitig mittels der Schneidrädchen geschnitten werden, wobei die Konturen durch Steuerung der Drehung der Schneidrädchen um die zur Glastafelebene senkrechte Achse, der Vorschub- oder Rückzugsgeschwindigkeit der Positionierbrücke (11) sowie der Vorschubgeschwindigkeit der Schneidrädchen geschnitten werden.

19. Verfahren nach Anspruch 18,
**dadurch gekennzeichnet, dass**
die Verbundglastafeln (17) zum Verschieben auf dem Auflagetisch (2) alternativ an gegenüberliegenden Kanten gegriffen und sowohl gezogen als auch geschoben werden.

## Claims

1. A device for cutting a laminated glass panel (17), having a supporting table (2) for the depositing of laminated glass panels (17), a positioning bridge (11), arranged above the supporting table (2) so as to be movable forward and backward in the table longitudinal direction (10), to displace a laminated glass panel (17) forward and backward in the table longitudinal direction (10) on the supporting table (2) and having a laminated glass cutting device (7) with cutting tools for cutting or scoring the laminated glass panel (17), wherein
the laminated glass cutting device (7) has a cutting bridge (8), wherein on the cutting bridge (8) there is at least one cutting tool at the upper side and the lower side respectively of the laminated glass panel (17) to be worked,
**characterised in that** the cutting tools are cutting wheels which are rotatable in a free or driven manner about an axis perpendicular to the cutting direction and parallel to the glass panel plane and are rotatable in a driven manner about an axis perpendicular to the glass panel plane and which are movable along the cutting bridge (8) transversely to the conveying direction of the laminated glass panel (17), so that any cutting contours desired can be cut dependent on the advancing or return speed of the positioning bridge (11) as well as on the advancing speed and the direction of the cutting wheels.

2. A device according to claim 1, **characterised in that** a gripping device (14) is present on the positioning bridge (11) and is designed in such a manner that, related to the opposed motion directions (30, 31) of the positioning bridge (11), a laminated glass panel (17) can be gripped from each of the directions.

3. A device according to claim 1 and/or 2, **characterised in that** the gripping device (14) has a gripper (21, 22) rotatable about the vertical axis related to the supporting table plane, which gripper is designed to be rotatable in different gripping directions.

4. A device according to claim 1 and/or 2, **characterised in that** a plurality of gripping devices (14) are present on the positioning bridge (11), wherein, related to the motion directions (30, 31) of the positioning bridge (11) along the longitudinal extension of the supporting table (2), there are at least one front gripper (21) and at least one rear gripper (22), so that the laminated glass panels (17) can be gripped alternately at opposite edges and can be pulled and pushed.

5. A device according to claim 4, **characterised in that** on the positioning bridge (11), along the longitudinal extension of the supporting table (2) there are at least one front gripper (21) and at least one rear gripper (22) present on each gripping device (14).

6. A device according to claim 4 and/or 5, **characterised in that** with respect to the longitudinal extension of the positioning bridge (11), the gripping devices (14) are arranged at irregular distances from one another, wherein for gripping laminated glass panels (17) of different widths, the distances between the gripping devices (14) become wider or narrower from one longitudinal edge (13) of the supporting table (2) to an opposite longitudinal edge (12).

7. A device according to any one of claims 4 to 6, **characterised in that** the distances between the gripping devices (14) are matched to standard formats of laminated glass panels (17).

8. A device according to any one of claims 4 to 7, **characterised in that** the gripping devices (14) have a lifting device (16) for raising the gripping device (14) above the level of a laminated glass panel (17), so that the positioning bridge (11) with raised gripping devices (14) can pass over the laminated glass panel (17).

9. A device according to claim 8, **characterised in that** the lifting device (16) has a pneumatic or hydraulic piston-cylinder unit (18) or an electromotive adjusting device, arranged between a securing device (19) and the other gripping device (14).

10. A device according to claim 8 and/or claim 9, **characterised in that** the gripping device (14) has an elongate gripper bearer (20), wherein the gripper bearer (20) is connected to the lifting device (16) so as to be raisable and lowerable, wherein the grippers (21, 22) with gripping claws (23) are on the ends of the gripper bearer (20), wherein the gripping jaws (25), formed by the gripping claws (23), of the grippers (21) are directed towards the cutting bridge (8) and the gripping jaws (25) of the grippers (22) are directed away from the cutting bridge (8).

11. A device according to any one of claims 3 to 10, **characterised in that** the grippers (21, 22) each have an actuating device (24) to open and close the gripping jaws (25).

12. A device according to claim 11, **characterised in that** the actuating device (24) is a pneumatic or hydraulic piston-cylinder unit (24) or an electromotive adjusting unit (24).

13. A device according to any one of claims 3 to 12, **characterised in that** each gripper (21, 22) has its own actuating device (24).

14. A device according to any one of claims 3 to 12, **characterised in that** the grippers (21, 22) of a gripping device (14) are actuated by a single actuating device (24).

15. A device according to any one of claims 4 to 14, **characterised in that** the supporting table (2) has, along its longitudinal extension, in alignment with the motion path of the gripping devices (14), slits (27) for parts, arranged below the level of a laminated glass panel (17), of the gripping devices (14).

16. A device according to any one of claims 3 to 15, **characterised in that** adjacent to the grippers (21, 22) on the gripping device (14) there are sensors (28) which detect a defined gripping depth, wherein the distance of the sensors (28) from the opening of the gripping jaws (25) is fixed in such a manner that the gripping claws (23) of the grippers (21, 22) only grip a laminated glass panel (17) in unlayered edge regions (29).

17. A device according to any one of claims 3 to 16, **characterised in that** upstream of the supporting table (2) there is arranged a feeder unit (40) by means of which a laminated glass panel (17) can be conveyed onto the supporting table (2) until the laminated glass panel (17) can be gripped by a gripper (21).

18. A method of contour cutting composite glass panels (17) using a device according to one or more of claims 1 to 17, wherein the contours are cut simultaneously at the upper side and the lower side by means of the cutting wheels, wherein the contours are cut by controlling the rotation of the cutting wheels about the axis perpendicular to the glass panel plane, the advancing or return speed of the positioning bridge (11) and the advancing speed of the cutting wheels.

19. A method according to claim 18, **characterised in that** for displacement on the supporting table (2), the laminated glass panels (17) are gripped alternately at opposite edges and are pulled and pushed.

## Revendications

1. Dispositif de découpe d'un plateau en verre feuilleté (17), comportant une table de support (2) pour y poser les plateaux en verre feuilleté (17), un portique de positionnement (11), disposé au-dessus de la table de support (2) dans le sens de la longueur de la table (10), de manière mobile en va-et-vient pour déplacer un plateau en verre feuilleté (17) sur la table de support (2) en va-et-vient dans le sens de la longueur de la table (10), et une unité de découpe du verre feuilleté (7) avec des outils de coupe pour découper ou entailler le plateau en verre feuilleté (17), dans lequel
ladite unité de découpe du verre feuilleté (7) possède un portique de découpe (8), le portique de découpe (8) étant muni d'au moins un outil de coupe présent respectivement au niveau de la face supérieure et de la face inférieure du plateau en verre feuilleté (17) à découper,
**caractérisé en ce que**
lesdits outils de coupe sont des molettes de découpe, qui sont montées rotatives, librement ou par entraînement, autour d'un axe perpendiculaire au sens de découpe et parallèle au plan du plateau en verre feuilleté, et sont montées rotatives par entraînement autour d'un axe perpendiculaire au plan du plateau en verre feuilleté et sont montées mobiles le long du portique de découpe (8) transversalement au sens de transport du plateau en verre feuilleté (17), de telle sorte qu'il est possible de couper n'importe quel contour de coupe en fonction de la vitesse d'avance ou de recul du portique de positionnement (11), ainsi que de la vitesse d'avance et de la direction des molettes de découpe.

2. Dispositif selon la revendication 1, **caractérisé en ce que** sur le portique de positionnement (11) est prévu un dispositif de préhension (14), qui est réalisé de telle sorte que, par rapport aux sens de déplacement (30, 31) opposés du portique de positionnement (11), il peut saisir un plateau en verre feuilleté (17) à partir de chacune des directions.

3. Dispositif selon les revendications 1 et/ou 2, **caractérisé en ce que** le dispositif de préhension (14) possède un élément de préhension (21, 22), monté rotatif par rapport au plan de la table autour d'un axe vertical et réalisé de manière à pouvoir tourner dans différentes directions de préhension.

4. Dispositif selon les revendications 1 et/ou 2, **caractérisé en ce qu'**une pluralité de dispositifs de préhension (14) sont présents sur le portique de positionnement (11), au moins un élément de préhension avant (21) et au moins un élément de préhension arrière (22) par référence aux sens de déplacement (30, 31) du portique de positionnement (11) le long de la dimension longitudinale de la table de support (2) étant présents, de telle sorte que les plateaux en verre feuilleté (17) peuvent être saisis alternativement au niveau des bords face à face et peuvent être tirés, de même que poussés.

5. Dispositif selon la revendication 4, **caractérisé en ce qu'**au moins un élément de préhension avant (21) et au moins un élément de préhension arrière (22) sont présents sur chaque dispositif de préhension (14) au niveau du portique de positionnement (11) le long de la dimension longitudinale de la table de support (2).

6. Dispositif selon les revendications 4 et/ou 5, **caractérisé en ce que** les dispositifs de préhension (14), par rapport à la dimension longitudinale du portique de positionnement (11), sont disposés à distances irrégulières entre eux, les distances entre les dispositifs de préhension (14) pouvant devenir plus larges ou plus étroites depuis un bord longitudinal (13) de la table de support (2) vers un bord longitudinal (12) situé en regard, afin de pouvoir saisir des plateaux en verre feuilleté (17) de largeurs différentes.

7. Dispositif selon l'une quelconque des revendications 4 à 6, **caractérisé en ce que** les distances entre les dispositifs de préhension (14) sont ajustées à des formats standard des plateaux en verre feuilleté (17).

8. Dispositif selon l'une quelconque des revendications 4 à 7, **caractérisé en ce que** les dispositifs de préhension (14) comportent un dispositif de levage (16) pour lever le dispositif de préhension (14) au-dessus du niveau d'un plateau en verre feuilleté (17), de telle sorte que le portique de positionnement (11) avec les dispositifs de préhension (14) relevés peut passer au-dessus du plateau en verre feuilleté (17).

9. Dispositif selon la revendication 8, **caractérisé en ce que** le dispositif de levage (16) comporte un vérin (18) pneumatique ou hydraulique ou un dispositif de réglage à moteur électrique, qui est agencé entre un dispositif de fixation (19) et le dispositif de préhension (14) restant.

10. Dispositif selon la revendication 8 et/ou la revendication 9, **caractérisé en ce que** le dispositif de préhension (14) comporte un porte-griffe (20) allongé, ledit porte-griffe (20) étant relié au dispositif de levage (16) pour être levé et abaissé, les éléments de préhension (21, 22) étant réalisés avec des griffes de préhension (23) au niveau de l'extrémité du porte-griffe (20), les mâchoires de préhension (25) des éléments de préhension (21), formées par les griffes de préhension (23), étant dirigées vers le portique de découpe (8) et les mâchoires de préhension (25) des éléments de préhension (22) étant dirigées dans le sens opposé au portique de découpe (8).

11. Dispositif selon l'une quelconque des revendications 3 à 10, **caractérisé en ce que** les éléments de préhension (21, 22) comportent chacun un dispositif de manoeuvre (24) pour ouvrir et fermer les mâchoires de préhension (25).

12. Dispositif selon la revendication 11, **caractérisé en ce que** le dispositif de manoeuvre (24) est un vérin (24) pneumatique ou hydraulique ou une unité de réglage (24) à moteur électrique.

13. Dispositif selon l'une quelconque des revendications 3 à 12, **caractérisé en ce que** chaque élément de préhension (21, 22) possède son propre dispositif de manoeuvre (24).

14. Dispositif selon l'une quelconque des revendications 3 à 12, **caractérisé en ce que** les éléments de préhension (21, 22) d'un dispositif de préhension (14) sont manoeuvrés par un seul dispositif de manoeuvre (24).

15. Dispositif selon l'une quelconque des revendications 4 à 14, **caractérisé en ce que** la table de support (2), le long de sa dimension longitudinale, comporte des rainures (27) pour les parties des dispositifs de préhension (14) disposées en dessous du niveau du plateau en verre feuilleté (17), lesdites rainures étant alignées avec la trajectoire de déplacement des dispositifs de préhension (14).

16. Dispositif selon l'une quelconque des revendications 3 à 15, **caractérisé en ce que** des capteurs (28) sont prévus sur le dispositif de préhension (14) au voisinage des éléments de préhension (21, 22) pour détecter une profondeur de préhension définie, la distance des capteurs (28) par rapport à l'ouverture des mâchoires de préhension (25) étant définie de telle sorte que les griffes de préhension (23) des éléments de préhension (21, 22) saisissent un plateau en verre feuilleté (17) uniquement dans des zones de bord (29) délaminées.

17. Dispositif selon l'une quelconque des revendications 3 à 16, **caractérisé en ce qu'**en amont de la table de support (2) est agencée une unité de chargement (40), par laquelle un plateau en verre feuilleté (17) peut être transporté sur la table de support (2) jusqu'à ce que le plateau en verre feuilleté (17) puisse être saisi par un élément de préhension (21).

18. Procédé pour la découpe des contours des plateaux en verre feuilleté (17) moyennant l'utilisation d'un dispositif selon une ou plusieurs des revendications 1 à 17, les contours pouvant être découpés simultanément tant sur la face supérieure que sur la face inférieure au moyen des molettes de découpe, les contours étant découpés moyennant la commande de la rotation des molettes de découpe autour de l'axe perpendiculaire au plan du plateau en verre feuilleté, de la vitesse d'avance ou de recul du portique de positionnement (11), ainsi que de la vitesse d'avance des molettes de découpe.

19. Procédé selon la revendication 18, **caractérisé en ce que** les plateaux en verre feuilleté (17), pour être déplacés sur la table de support (2), peuvent être saisis alternativement au niveau des bords face à face et peuvent être tirés, de même que poussés.
